# EUROPEAN PATENT APPLICATION

(11) **EP 0 751 515 A2**
(43) Date of publication of application: **02.01.1997**
(21) Application number: 96110176.3
(22) Date of filing: 24.06.1996
(51) Int. Cl.: G11B 20/00

(54) **Method of and apparatus for recording record medium and apparatus for reproducing the same**

(30) Priority: 30.06.1995 JP 166025/95
(71) Applicant: PIONEER ELECTRONIC CORPORATION, Meguro-ku Tokyo-to (JP)
(72) Inventor: Yamamoto, Kaoru, c/o Pioneer Electronic Corp., Tsurugashima-shi, Saitama-ken (JP); Tozaki, Akihiro, c/o Pioneer Electronic Corp., Tsurugashima-shi, Saitama-ken (JP); Moriyama, Yoshiaki, c/o Pioneer Electronic Corp., Tsurugashima-shi, Saitama-ken (JP); Nakamura, Hiroshi, c/o Pioneer Electronic Corp., Tokorozawa-shi, Saitama-ken (JP)
(74) Representative: Viering, Jentschura & Partner

(57) **Abstract**

An apparatus (100) for recording a record medium (6) is provided with: a dividing unit (3) for dividing main information, which is to be reproduced by a reproducing apparatus (200), into a plurality of information units each of which can be individually reproduced by the reproducing apparatus; a generating unit (1) for generating additional information for controlling a reproduction of the main information and including a reproduction permission information, which indicates whether the reproduction of each of the information units is permitted or prohibited, for each of the information units; an adding unit (SW1, SW2) for adding the generated additional information to each of the information units to form a data group respectively; and a recording unit (4, 5) for recording each data group to the record medium.

## Description

### BACKGROUND OF THE INVENTION

### 1. Field of the Invention

The present invention relates to a method of and an apparatus for recording and/or reproducing main information, such as video information and audio information, together with additional information onto and from a predetermined type of record medium.

### 2. Description of the Related Art

An optical disc can be randomly accessed, and is used as a record medium, to which various information besides the video and audio information can be recorded. In particular, since the optical disc, to which digital data can be recorded, can be recorded with a number of additional information other than the main information, the special reproductions can be performed by use of the additional information. In some of the special reproductions, the reproduction may be prohibited under a certain condition in case of performing the ordinary continuous reproduction or the ordinary search with respect to a special type of software.

One example for such an intentionally prohibited reproduction is an interactive reproduction, in which two way information exchange can be performed between the user and the media. For example, in case of an educational software of interactive type capable of this special reproduction (in which the "answer" is ready for each "question"), only the portion of the "question" is permitted to be reproduced regardless of any condition, while the portion of the "answer" is prohibited to be reproduced unless the user performs a predetermined operation to answer the pertinent "question".

Another example for such an intentionally prohibited reproduction is a reproduction of a new movie software. In case of supplying the new movie software, which is to be released, to the market, the software producer or the sales company, who are the distributor, often gives some restrictions to the timing and area of distribution for the new movie software from a reason of marketing. Namely, the software producer or the sales company utilizes an optical disc capable of special reproduction for supplying the new movie software to be released. More concretely, it is desired for them to prohibit the reproduction until the date and time of the release for the new movie software, and to permit the reproduction just on and after the date and time of the release, so as to world-widely unify the date of the release. Alternatively, it is desired for them to change or shift the date of the release from area to area such as Asia, Europe, America and so on.

In order to perform the above mentioned special reproduction of the optical disc, there is a technique to execute a program software for the control purpose simultaneously beside the movie software. According to this technique, the program software is supplied as an independent medium in parallel with the optical disc for the new movie software.

In this technique, at the time of reproducing the optical disc for the movie software, the reproducing apparatus simultaneously reproduces the program software. The program software is provided with a management program for performing the management of the movie software on the basis of the address information (e.g. the track) of the optical disc. The judgment whether or not the reproduced information of the optical disc is displayed and the conditions for the display are managed by this management program.

Namely, in the above explained special reproduction, while the information is supplied which has been recorded according to the ordinary condition, the display of the reproduced information is extraordinary controlled by the management program which is being separately reproduced.

However, in the above explained special reproduction technique, since it is necessary to perform the management program beside the optical disc, the reproducing apparatus should have a special capability of performing the simultaneous reproduction of the program software and the movie software. Thus, the construction of the reproducing apparatus becomes complicated and the production cost is increased, which is a problem.

Further, in case of the reproducing apparatus capable of the simultaneous reproduction, if a track jump is generated due to an influence of a shock, a scratch, a dust etc., on the optical disc, there may be generated a shift between the track, which the management program expects to be presently traced, and the track, which is actually being traced, so that an erroneous operation may be caused in the reproducing apparatus.

In particular, at the time of performing a high speed search, since skipping across the tracks of the optical disc is performed, it is difficult for the management program to trace the presently traced track. Thus, in the high speed search, there is a danger that the information, which should not be displayed, is erroneously displayed for a short time.

### SUMMARY OF THE INVENTION

It is therefore an object of the present invention to provide a method of and an apparatus for recording a record medium, and an apparatus for reproducing the record medium, which can precisely instruct permission and prohibition of reproduction in accordance with a usage of the record medium.

The above object of the present invention can be achieved by a recording method of recording a record medium. The recording method is provided with the steps of: dividing main information, which is to be reproduced by a reproducing apparatus, into a plurality of information units each of which can be individually reproduced by the reproducing apparatus; generating additional information for controlling a reproduction of the main information and including a reproduction permission information, which indicates whether the reproduction of each of the information units is permitted or prohibited, for each of the information units; adding the generated additional information to each of the information units to form a data group respectively; and recording each data group to the record medium.

According to the recording method of the present invention, the main information, which is to be reproduced by a reproducing apparatus, is divided into a plurality of information units each of which can be individually reproduced by the reproducing apparatus. The additional information for controlling a reproduction of the main information and including a reproduction permission information, which indicates whether the reproduction of each of the information units is permitted or prohibited, is generated for each of the information units. Then, the generated additional information is added to each of the information units to form a data group respectively. Finally, each data group is recorded to the record medium.

Consequently, the permission and prohibition of reproduction of the record medium, which has been recorded by the recording method of the present invention, can be instructed precisely in accordance with a usage of the record medium. Thus, the software capable of the interactive reproduction (e.g. the educational software, the game software) can be recorded by the present invention.

As one aspect of the above described recording method of the present invention, the recording permission information includes level information indicating a level, which is to be compared with a reproduction permission level held by the reproducing apparatus, to determine whether the reproduction of each of the information units is permitted or prohibited according to a result of comparison.

According to this aspect of the present invention, prior to the reproduction, the reproduction permission level (e.g. the level which corresponds to the priority order for reproduction) is held by the reproducing apparatus. At the time of reproducing the main information on the record medium recorded by the present invention, the level information is also reproduced. Then, the level indicated by the level information can be compared with the reproduction permission level held by the reproducing apparatus. Thus, it can be determined whether the reproduction of each of the information units is permitted or prohibited according to the result of comparison.

For example, assuming that the level, which indicates the priority order for reproduction, is held by the reproducing apparatus as the reproduction permission level. In case that the reproduction permission level held by the reproducing apparatus indicates a first number and that the level information included in the additional information reproduced from the record medium indicates a second number, the first and second numbers are compared with each other by the reproducing apparatus. As the result of comparison, if the first number is greater than the second number (or if the second number is greater than the first number), the reproduction is permitted. If the first number is not greater than the second number (or if the second number is not greater than the first number), the reproduction is prohibited. Thus, by setting different reproduction permission levels to a plurality of reproducing apparatuses, even if the record medium is recorded with the data of the same content by the recording apparatus, the information permitted and the information prohibited by respective reproducing apparatuses are different from each other. Consequently, depending upon the type of the reproducing apparatuses such as the business-use-type, the home-use-type and so on, the permission and prohibition of reproduction of the record medium can be instructed.

In this aspect of the present invention, it is preferable that the reproduction permission information further includes updating information to update the reproduction permission level of the reproducing apparatus. In this case, at the time of reproducing the record medium, the reproduction permission level held by the reproducing apparatus is updated in accordance with the updating information which is reproduced from the record medium.

For example, assuming that the main information recorded on the record medium is the game software, which is constituted such that new picture planes corresponding to new stages of the game appear one after another as the user finishes (i.e. completes) one stage of the game without failing in the middle of it, the updating information is recorded as the additional information which is reproduced at the end of the picture plane of each completed stage. Actually, when the user proceeds the game and completes it without failure, since the updating information is reproduced, the priority order is updated to the higher order. Then, once the reproduction permission level is updated, the reproduction of the new picture plane, which been prohibited in the past, may be presently permitted by the level information reproduced by the reproducing apparatus. Namely, only in the case that the game software is completed via a certain procedure, the new picture plane can be permitted to be reproduced. Consequently, since the reproduction permission level held by the reproducing apparatus can be updated by the updating information, it is possible to freely set the permission and prohibition of reproduction in case of reproducing the game software, which changes the picture plane along with the procedure of the operation condition, the movie software, which permission of reproduction (e.g. the release date and time) is to be commercially adjusted, and so on.

The above object of the present invention can be also achieved by a recording apparatus for recording a record medium. The recording apparatus is provided with: a dividing unit for dividing main information, which is to be reproduced by a reproducing apparatus, into a plurality of information units each of which can be individually reproduced by the reproducing apparatus; a generating unit for generating additional information for controlling a reproduction of the main information and including a reproduction permission information, which indicates whether the reproduction of each of the information units is permitted or prohibited, for each of the information units; an adding unit for adding the generated additional information to each of the information units to form a data group respectively; and a recording unit for recording each data group to the record medium.

According to the recording apparatus of the present invention, the above explained recording method of the present invention can be performed.

As one aspect of the above described recording apparatus of the present invention, the reproduction permission information includes level information indicating a level, which is to be compared with a reproduction permission level held by the reproducing apparatus, to determine whether the reproduction of each of the information units is permitted or prohibited according to a result of comparison in the same manner as the above explained recording method of the present invention.

In this aspect of the present invention, it is preferable that the reproduction permission information further includes updating information to update the reproduction permission level of the reproducing apparatus in the same manner as the above explained recording method of the present invention.

As another aspect of the above described recording apparatus of the present invention, the adding unit is provided with a switching device for successively switching the information unit and the additional information to each other so as to form the data group respectively.

According to this aspect, the data group having the main information and its corresponding additional information can be efficiently formed one after another.

As another aspect of the above described recording apparatus, the generating unit is provided with a determining device for determining whether the reproduction of each of the information units is permitted or prohibited.

According to this aspect, the determination as for the permission and prohibition of the reproduction can be efficiently performed by the determining device.

The above object of the present invention can be also achieved by a reproducing apparatus for reproducing a record medium, which is recorded by a recording method provided with the steps of: dividing main information into a plurality of information units each of which can be individually reproduced; generating additional information for controlling a reproduction of the main information and including a reproduction permission information, which indicates whether the reproduction of each of the information units is permitted or prohibited, for each of the information units; adding the generated additional information to each of the information units to form a data group respectively; and recording each data group to the record medium. The reproducing apparatus is provided with: a reproducing unit for reproducing the main information and the additional information by a unit of the data group from the record medium; a detecting unit for detecting the reproduction permission information included in the reproduced additional information for each data group; and an output unit for outputting the reproduced main information only when the detected reproduction permission information indicates that the reproduction is permitted, for each data group.

According to the reproducing apparatus of the present invention, the permission and prohibition of reproduction of the record medium, which has been recorded by the aforementioned recording method of the present invention, can be instructed precisely in accordance with a usage of the record medium. Thus, the software capable of the interactive reproduction (e.g. the educational software, the game software) can be reproduced by the present invention.

As one aspect of the above described reproducing apparatus of the present invention, the reproduction permission information includes level information indicating a level, which is to be compared with a reproduction permission level set to the apparatus, to determine whether the reproduction of each of the information units is permitted or prohibited; the apparatus further comprises a memory device for holding the reproduction permission level; and the output unit comprises a comparing unit for comparing the level, which is indicated by the level information included in the detected reproduction permission information, with the reproduction permission level held by the memory device, to determine whether the reproduction of each of the information units is permitted or prohibited according to a result of comparison.

According to this aspect of the present invention, at the time of reproducing the main information, the level information is also reproduced. Then, the level indicated by the level information is compared with the reproduction permission level held by the reproducing apparatus. Thus, it can be determined whether the reproduction of each of the information units is permitted or prohibited according to the result of comparison. Consequently, depending upon the type of the reproducing apparatuses such as the business-use-type, the home-use-type and so on, the permission and prohibition of reproduction of the record medium can be instructed.

In this aspect of the present invention, it is preferable that: the reproduction permission information further includes updating information to update the reproduction permission level held by the memory device; and the apparatus further comprises an updating unit for updating the reproduction permission level held by the memory device on the basis of the updating information included in the detected reproduction permission information. In this case, since the reproduction permission level held by the reproducing apparatus can be updated by the updating information, it is possible to freely set the permission and prohibition of reproduction in case of reproducing the game software, the movie software and so on.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

FIG. 1 is a block diagram of a recording apparatus of an embodiment of the present invention;
FIG. 2 is a block diagram of a reproducing apparatus of the embodiment;
FIG. 3 is a diagram showing a construction of data recorded on a record medium used for the embodiment;
FIG. 4 is a flow chart of a reproducing operation of the first embodiment;
FIG. 5, which consist of FIGs. 5A to 5D, are diagrams for explaining the reproducing operation of the first embodiment;
FIG. 6 is a flow chart of a reproducing operation of a second embodiment of the present invention; and
FIG. 7 is a flow chart of a reproducing operation of a third embodiment of the present invention.

### DETAILED DESCRIPTION OF THE PREFERRED EMBODIMENTS

Referring to the accompanying drawings, embodiments of the present invention will be now explained.

### 1. First Embodiment

### (i) Construction of Recording Apparatus

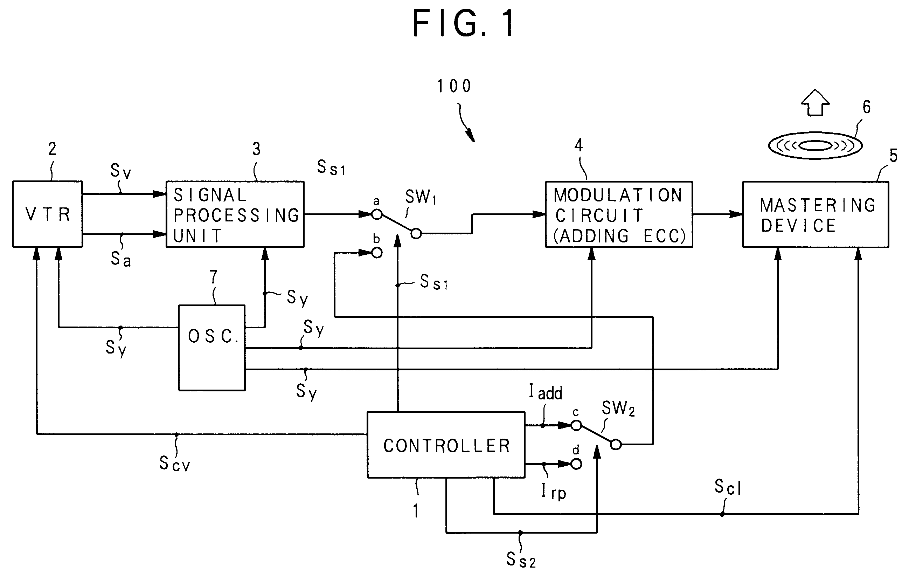

FIG. 1 shows a construction of a recording apparatus for recording a record medium in a first embodiment of the present invention.

In FIG. 1, a recording apparatus 100 is constructed to record video information, audio information and additional information as separated packet data respectively obtained by processing the video, audio and additional information respectively, onto an original disc 6 for an optical disc, which is formed of a glass material for example. The original disc 6 used in the present embodiment plays a role of a master disc to produce a number of replica discs. In place of the original disc 6, a magneto optical disc etc. which is cable of recording and reproducing may be used as the record medium. More concretely, the recording apparatus 100 is provided with a controller 1, a VTR (Video Tape Recorder) 2, a signal processing unit 3, a modulation circuit 4, a mastering device 5, an oscillator (OSC) 7, a switch SW1 and a switch SW2.

The controller 1 is adapted to perform an over-all control of the recording apparatus 100, and supplies a control signal Scv to the VTR 2 and supplies a control signal Sc1 to the mastering device 5. The switch SW1 is switched according to a selection signal Ss1 outputted from the controller 1, to add additional information Iadd in the form of the packet data (i.e. Iadd packet data), which is supplied from the controller 1 via the switch SW2, onto data group of multiplexed stream data at a header portion thereof. The VTR 2 is a VTR for a business use, which has a tape width of 1 inch for example, reproduces a software to be recorded onto the original disc 6, and outputs a video signal Sv and an audio signal Sa. The VTR 2 may be an analog VTR or a digital VTR.

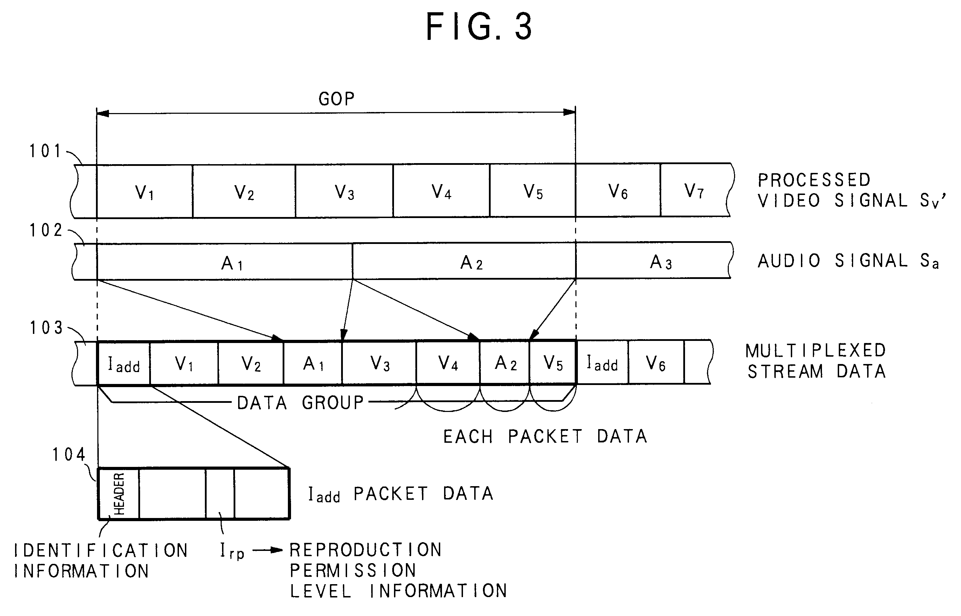

The signal processing unit 3 applies a predetermined signal process to the video signal Sv to generate a data stream 101 of the processed video signal Sv' as shown in FIG. 3. As the signal process, for example, a high efficiency coding process such as a coding process based on the MPEG (Moving Picture Expert Group) standard, which compresses the video data in each GOP (Group Of Pictures) may be applied here. The data stream 101 of the processed video signal Sv' and a data stream 102 of the audio signal Sa as shown in FIG. 3 are time-shared and multiplexed on the basis of a synchronization signal Sy generated by the oscillator OSC 7. As a result, multiplexed stream data 103 as data groups are generated as shown in FIG. 3. In FIG. 1 again, the controller 1 outputs reproduction permission information Irp in addition to the additional information Iadd, which includes the sub-code information such as a character code information. The switch SW2 is switched according to a selection signal Ss2 outputted from the controller 1, to insert the reproduction permission information Irp into the additional information Iadd, and outputs a data stream 104 of the packet data of the additional information Iadd as shown in FIG. 3.

In FIG. 1, the modulation circuit 4 interleaves the multiplexed stream data from the switch SW1, and adds error correction code data (e.g. ECC data) to the interleaved data stream. The mastering device 5 performs cutting the original disc 6 in correspondence with ON/OFF information of the interleaved data stream. The oscillator 7 generates and supplies the synchronization signal Sy to each circuit in the recording apparatus 100.

The packet data of the additional information Iadd are added to the header portion of the multiplexed stream data for each data group as shown in FIG. 3. The data stream 104 of the packet data of the additional information Iadd is provided with the header information including the address information, the attribute information such as identification information and so on, and is also provided with the reproduction permission level information as one example for the reproduction permission information.

### (ii) Construction of Reproducing Apparatus

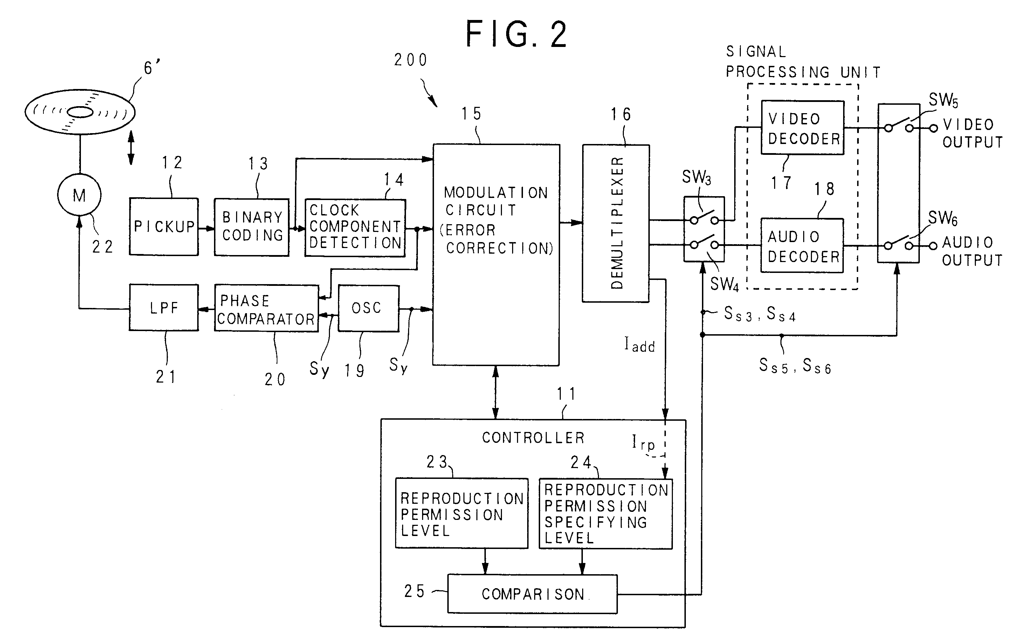

FIG. 2 shows a construction of a reproducing apparatus for reproducing an optical disc 6' replicated from the original disc 6 which has been recorded by the recording apparatus 100 of FIG. 1, in the first embodiment of the present invention. More concretely, the reproducing apparatus 200 for reproducing the optical disc 6' is provided with a controller 11, an optical pickup 12, a binary coding circuit 13, a clock component detection circuit 14, a demodulation circuit 15, a demultiplexer 16, a video decoder 17, an audio decoder 18, an oscillator OSC 19, a phase comparator 20, a low pass filter (LPF) 21, a spindle motor 22 and switches SW3 to SW6.

The optical pickup 12 is adapted to reproduce an RF (Radio Frequency) signal from the optical disc 6'. The binary coding circuit 13 reshapes the signal wave form of the RF signal, which has been deformed from the original form, and outputs it as digital data able to process. The clock component detection circuit 14 detects and extracts the basic clock component of the digital data. The oscillator 19 generates a synchronization signal Sy.

A phase lock loop to stabilize the basic clock is constituted by the clock component detection circuit 14, the phase comparator 20 for comparing the synchronization signal Sy with the extracted basic clock, the low pass filter 21 for extracting the low frequency component of the phase comparison output, the spindle motor 22 for rotating the optical disc 6', the optical pickup 12 and the binary coding circuit 13.

The demodulation circuit 15 performs the error correction and the de-interleave of the digital data, to demodulates the digital data to be the multiplexed stream data (corresponding to the data stream 103 in FIG. 3) as the data group. The demultiplexer 16 re-arranges the data in each block, which is included in the multiplexed stream data (corresponding to the data stream 103 in FIG. 3), as the group consisting of various packet data, to re-construct the processed video signal Sv' (corresponding to the data stream 101 in FIG. 3), the audio signal Sa (corresponding to the data stream 102 in FIG. 3) and the packet data of the additional information Iadd (corresponding to the data stream 104 in FIG. 3). The packet data of the additional information Iadd are supplied to the controller 11. The switches SW3 and SW4 respectively output the processed video signal Sv' and the audio signal Sa, which have been re-constructed, according to selection signals Ss3 or Ss4 outputted from the controller 11. The video decoder 17 performs the decoding process with respect to the processed video signal Sv' (e.g. the expanding process of the compressed video signal) to output the video signal Sv. The audio decoder 18 decodes and outputs the audio signal Sa. The switch SW5 and SW6 are adapted to permit or prohibit the output of the video signal Sv and the audio signal Sa on the basis of selection signals Ss5 and Ss6 outputted from the controller 11.

### (iii) Recording Operation

In the present embodiment, the reproduction permission specifying code in a following Table 1 is used as the reproduction permission information Irp.

**Table 1**

| reproduction permission specifying code | content |
|---|---|
| 00h | The reproduction is permitted for all reproducing apparatuses. |
| 01h to 7Fh | The reproduction is basically prohibited. But, the condition can be set for the future use. |
| 80h | The reproduction is basically prohibited. But, the reproduction is permitted in case of reproduced via the predetermined procedure. |
| 81h to FFh | The reproduction is basically prohibited. But, the condition can be set for the future use. |

In the Table 1, the reproduction permission specifying codes of "00h (h represents the hexadecimal (16) number)" and "80h" are mainly used. Other codes are used for the system expansion in the future. If the system expansion in the future is not needed, one excess bit of the control code which is already being used, may be assigned to the reproduction permission specifying bit of the present embodiment.

The reproduction permission information Irp is information to specify to the player (i.e. the reproducing apparatus) whether or not it is permitted to reproduce the information related to the pertinent data group (e.g. the video information, the audio information). In FIG. 1, the recording apparatus 100 switches the switch SW1 from the a side to the b side each time when the multiplexed stream data are generated, so as to record the packet data of the additional information Iadd to the header portion of the multiplexed stream data. The recording apparatus 100 switches the switch SW2 from the c side to the d side while recording the packet data of the additional information Iadd, so as to record the reproduction permission specifying code.

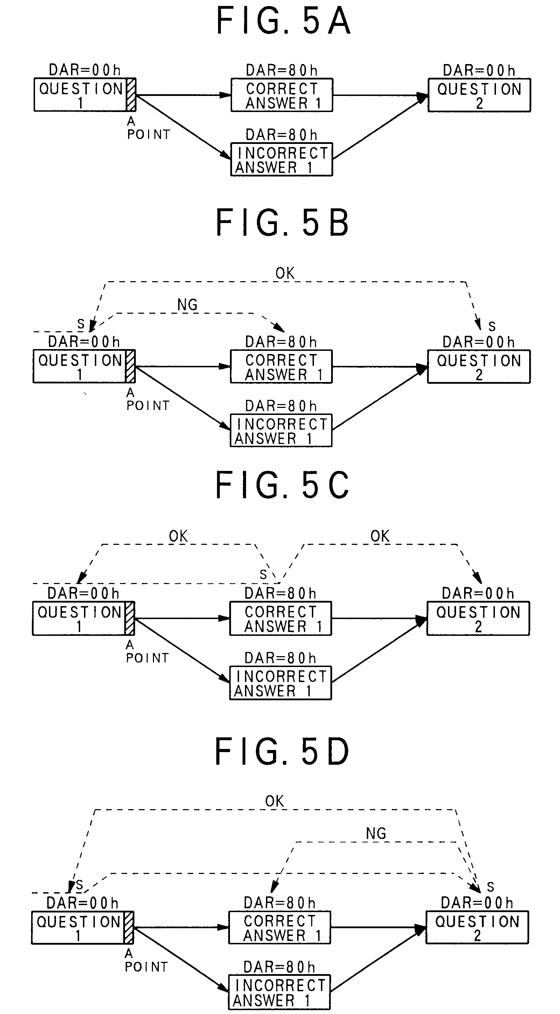

FIGs. 5A to 5D show examples of an educational software as an example of recording the reproduction permission specifying code of the present embodiment.

In FIGs. 5A to 5D, each block indicates one display unit. The display unit is generally constituted of a plurality of multiplexed stream data group. Each reproduction permission specifying code of the plurality of multiplexed stream data group, which constitutes one display unit, specifies the code same to each other. Namely, the reproduction is permitted or prohibited by a unit of each block.

As shown in FIG. 5A, it is necessary to always display the block for the "question 1" in case of the educational software. Thus, as all of the reproduction permission specifying codes included in the multiplexed stream data constituting the block for the "question 1", the code "00h" indicating that the reproduction for all players is permitted is recorded.

On the contrary to this, as for the block for the "correct answer 1" (which is to be displayed in case that the user's answer is judged to be correct) or the "incorrect answer 1" (which is to be displayed in case that the user's answer is judged to be incorrect) with respect to the "question 1", the code "80h" indicating that the reproduction is basically prohibited is recorded.

By the above described procedure, the information is recorded onto the original disc 6 together with the reproduction permission information Irp. By the replica disc manufacturing process, a plurality of optical discs 6' can be replicated from the original disc 6.

### (iv) Reproducing Operation

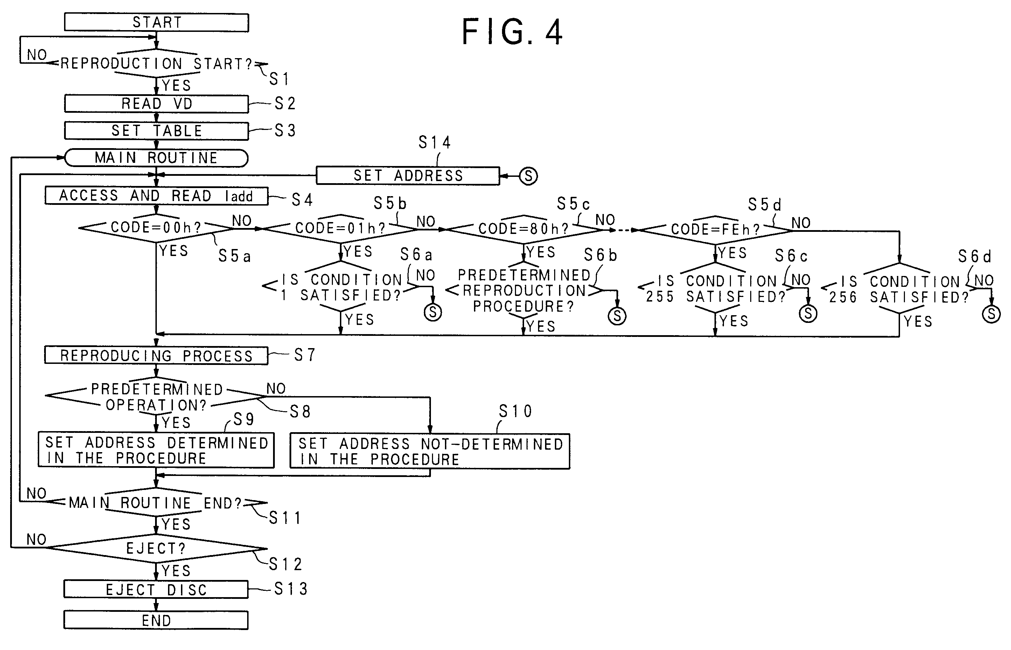

Nextly, the operation of the reproducing apparatus 200 for reproducing the optical disc 6' replicated from the original disc 6 in FIG. 2 will be explained with referring to a flow chart of FIG. 4 and FIGs. 5A to 5D.

In FIG. 4, at first, it is judged by the controller whether or not the reproduction is to be started (step S1). When the reproduction is judged to be started (step S1:YES), the index etc. of the volume descriptor (VD) of the optical disc is read (step S2). A table of the logical address to read the information recorded at arbitrary positions of the optical disc is set (step S3).

Then, the main routine is performed to reproduce the video and audio information.

By the instruction of the user during the reproduction in the main routine or by sequentially reading the optical disc from the beginning in the main routine, a certain address is accessed, and the packet data of the additional information Iadd as for the multiplexed stream data at the certain address are read out (step S4).

Then, it is judged to which code in the Table 1 the reproduction permission specifying code included in the read packet data of the additional information Iadd is coincident (step S5a to 5d).

Namely, it is judged whether or not the reproduction permission specifying code is "00h" (step S5a). If it is judged to be the code "00h" (step S5a: YES), the reproducing process is performed (step S7) since all of the multiplexed stream data in this case are permitted to be reproduced as shown in the Table 1.

If it is not judged to be the code "00h" (step S5a: NO), it is judged whether or not the reproduction permission specifying code is "01h" (step S5b). If it is judged to be the code "01h" (step S5b: YES), it is further judged whether or not the reproduction condition of the reproduction permission level "1" is satisfied (step S6a). As the reproduction condition, the reproduction permission levels 1 to 256 are set for the system expansion in the future. Then, if it is judged to be satisfied (step S6a: YES), the reproducing process is performed (step S7) since the multiplexed stream data in this case are permitted to be reproduced as shown in the Table 1.

If it is not judged to be the code "01h" (step S5b: NO), it is judged whether or not the reproduction permission specifying code is "80h" (step S5c). If it is judged to be the code "80h" (step S5c: YES), it is further judged whether or not the reproduction procedure until the current reproduction is the predetermined procedure (step S6b). Then, if it is judged to be the predetermined procedure (step S6b: YES), the reproducing process is performed (step S7) since the multiplexed stream data in this case are permitted to be reproduced as shown in the Table 1.

If it is not judged to be the code "80h" (step S5c: NO), it is judged whether or not the reproduction permission specifying code is "FEh" (step S5d). If it is judged to be the code "FEh" (step S5d: YES), it is further judged whether or not the reproduction condition of the reproduction permission level "255" is satisfied (step S6c). Then, if it is judged to be satisfied (step S6c: YES), the reproducing process is performed (step S7) since the multiplexed stream data in this case are permitted to be reproduced as shown in the Table 1.

If the reproduction permission specifying code is not judged to be the code "FEh" (step S5d: NO), it is further judged whether or not the reproduction condition of the reproduction permission level "256" is satisfied (step S6d). Then, if it is judged to be satisfied (step S6d: YES), the reproducing process is performed (step S7) since the multiplexed stream data in this case are permitted to be reproduced as shown in the Table 1.

In each of the steps S6a to S6d, if the result of the judgment is negative (NO) i.e. if the reproduction procedure is not right, the address to be nextly accessed is set (step S14) while the reproducing process is stopped since it is not permitted by the reproduction permission specifying code. Then, the new additional information Iadd is read again (step S4).

The processes at the steps S5c and S6b are explained in more detail, with referring FIG. 5B.

In order to explain it clearly, the case where the educational software is recorded on the record medium is explained here. When the block for the "question 1" is reproduced, the user inputs the answer to the reproducing apparatus 200 via an input device with respect to the "question 1". The reproducing apparatus 200 reproduces either one of the block for the "correct answer 1" and the block for the "incorrect answer 1" depending upon whether the inputted answer is correct or incorrect after passing through the last point (i.e. the A point) of the block for the "question 1". Since this procedure is the predetermined right procedure (step S6b: YES), the reproducing apparatus reproduces the pertinent block although the reproduction permission specifying code "80h", which indicates that the reproduction is basically prohibited, is recorded to the block for the "correct answer 1" or "incorrect answer 1". On the other hand, when the search or scan operation is performed, there may be raised a case where the block for the "correct answer 1" is directly accessed and reproduced by jumping from a middle point of the block for the "question 1" accompanied with the scan operation without reproducing the A point at the last portion of the "question 1", as indicated by a broken line in FIG. 5B. Since the A point in the block for the "question 1" is not reproduced in this case, this procedure is not judged to be the right procedure. Namely, such a search or scan operation is judged to be NG (No Good) and is not permitted by the reproducing apparatus 200. Thus, the reproducing apparatus 200 judges that the procedure is not right (NG) (step S6b: NO), and stops the reproduction. Namely, in FIG. 2, the controller 11 outputs the selection signals Ss5 and Ss6 to shut off the switches SW5 and SW6, so that the block for the "correct answer 1" is not reproduced in this case. At the time when the reproduction is prohibited, the immediately previous display may be displayed as a still picture display, for example.

On the other hand, if the A point of the block for the "question 1" is rightly reproduced as indicated by a broken line in FIG. 5C, after the block for the "correct answer 1" is started to be reproduced, it is possible to jump from the middle portion of the "correct answer 1" back to reproduce the "question 1" once again or to reproduce the next "question 2".

As shown in FIG. 5D, it is possible to reproduce the next "question 2" without passing through the A point of the "question 1" by jumping over it. However, even if the "correct answer 1" or the "incorrect answer 1" with respect to the "question 1" is attempted to be reproduced by jumping back to it from the middle portion of the "question 2", the "correct answer 1" or the "incorrect answer 1" is not permitted to be reproduced unless the A point of the "question 1" is correctly passed through.

In FIG. 4 again, in case that a predetermined operation (e.g. the input operation of the answer with respect to the "question" by the user) is not needed e.g. in case that the multiplexed stream data are being reproduced at the middle of the block (step S8: NO), the address setting operation for jumping etc. is not set. Namely, the address, which is not determined in the procedure, is set (step S10). As long as the main routine is not ended (step S11:NO), the next multiplexed stream data are reproduced, and the above explained steps from S4 to S11 are repeated.

In case that the A point at the last portion of the "question" is reproduced and that the predetermined operation (e.g. the input operation of the answer with respect to the "question" by the user) is performed (step S8:YES), a predetermined next address is set. Namely, the address, which is determined in the procedure, is set (step S9). Then, as long as the main routine is not ended (step S11: NO), the next multiplexed stream data are reproduced, and the above explained steps from S4 to S11 are repeated.

When the process of the main routine is ended (step S11:YES), the above mentioned process is continued unless the ejection is instructed (step S12:NO). When the ejection is instructed (step S12:YES), the optical disc 6' is ejected (step S13), and the process is ended.

As described above in detail, according to the first embodiment, by predetermining and recording the reproduction permission specifying code, the justice of the reproduction procedure can be judged by the reproducing apparatus 200. Therefore, even if any kind of reproduction such as the scan, the jump, the reverse etc. is attempted to be performed, a certain information is prevented from being erroneously reproduced.

### 2. Second Embodiment

### (i) Construction of Recording Apparatus

The construction of a recording apparatus for recording a record medium in a second embodiment of the present invention is the same as that of the first embodiment of FIG. 1, except that the controller 1 generates a reproduction permission information Irp which indicates the permission under a certain condition.

### (ii) Construction of Reproducing Apparatus

The construction of a reproducing apparatus for reproducing a record medium in the second embodiment of the present invention is the same as that of the first embodiment of FIG. 2, except that the controller 11 holds a reproduction permission level 23 by a dip switch, a non-volatile RAM etc. in advance. Alternatively, the reproduction permission level 23 exclusive for the reproducing apparatus 200 may be stored to the memory at the time of initializing the reproducing apparatus 200. In case that the additional information Iadd is reproduced from the demultiplexer 16, the reproduction permission specifying level 24 is extracted from the reproduction permission information Irp. Further, the comparator 25 outputs the selection signals Ss3 to Ss6 on the basis of the comparison result.

### (iii) Operation

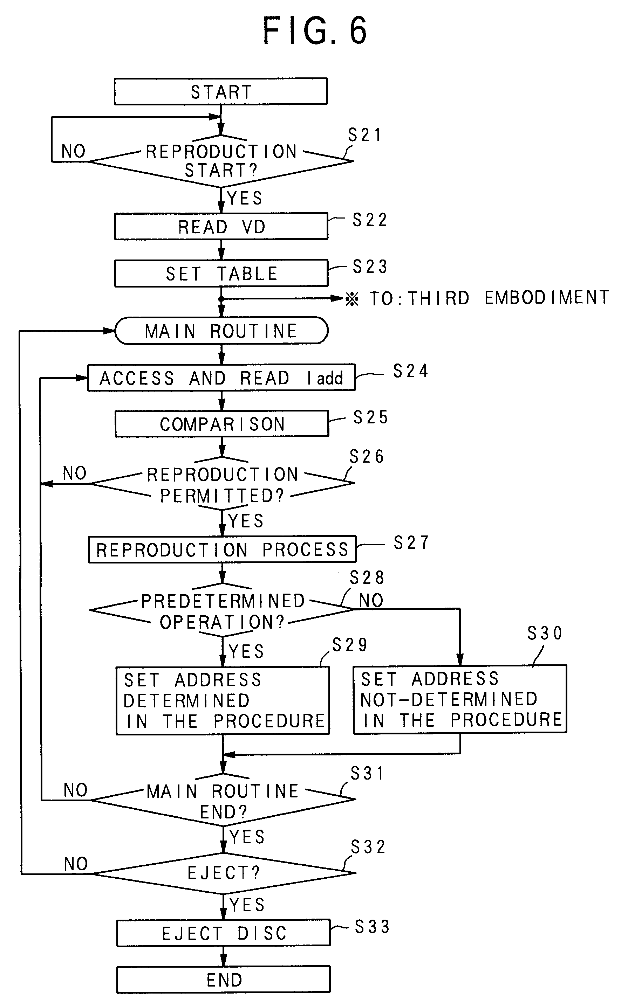

The operation of the second embodiment will be explained with referring to a flow chart of FIG. 6.

In the present embodiment, the reproduction permission specifying code in a following Table 2 is used as the reproduction permission information.

**Table 2**

| reproduction permission specifying code | content |
|---|---|
| 00h | The reproduction is permitted for all reproducing apparatuses. |
| 01h to FFh | The reproduction is basically prohibited (but, the condition can be set for the future use). |
| | i) RPS code = RP level of reproducing apparatus |
| | ii) RPS code < RP level of reproducing apparatus |
| | iii)RPS code > RP level of reproducing apparatus |
| | The reproduction is permitted under one or more conditions divided into the above I) to iii) cases. |
| "RPS code" in Table 2 represents a reproduction permission specifying code. "RP level" in Table 2 represents a reproduction permission level. | |

According to Table 2, in case that the reproduction permission specifying code is "00h", the reproduction is permitted in all players (reproducing apparatus). The value specified by each of the reproduction permission specifying codes "01h" to "FFh" indicates the priority order for the reproduction permission. The reproduction permission level held by the reproducing apparatus 200 in advance is compared with this reproduction permission specifying code, so that the reproduction is permitted only in case that they are coincident with each other or only in case that one is larger than the other, for example. The condition for the coincidence may be freely determined by the optical disc manufacturing company without referring to Table 2.

In FIG. 6, steps S21 to S24 are the same as the steps S1 to S4 of FIG. 4 respectively, and the explanation thereof are omitted.

From the additional information Iadd which has been read at the step S24 and which is related to the multiplexed stream data, the reproduction permission specifying code is extracted, and is compared with the reproduction permission level held by the controller 11 in advance (step S25).

Then, it is judged whether the reproduction of the pertinent multiplexed stream data is permitted or prohibited on the basis of the Table 2 (step S26). If the reproduction is prohibited (step S26: NO), the next address is accessed (step S24). If the reproduction is permitted (step S26: YES), the reproducing process (i.e. the reproduction of 1 GOP) is performed (step S27).

In FIG. 6, steps S28 to S33 are the same as the steps S8 to S13 of FIG. 4 respectively, and the explanations thereof are omitted.

As described above in detail, according to the second embodiment, the reproduction permission level is set for each of the reproducing apparatuses, and the condition is judged between the reproduction permission level and the reproduction permission specifying code supplied from the record medium. Therefore, by setting the reproduction permission level for each of the reproducing apparatuses, the information desired to be reproduced and the information not desired to be reproduced can be selectively set.

For example, the information related to the maintenance for the business-use-type apparatuses is not necessary for the general users. Thus, the value of the reproduction permission specifying code as for the information for the maintenance may be set high so that it can be reproduced only by the business-use-type apparatus which holds the high reproduction permission level.

Further, by providing a user who concludes a specific contraction with the reproducing apparatus in which a specific reproduction condition is set, it is possible to allow just this user to perform the reproduction while prohibiting the other users to perform the reproduction.

### 3. Third Embodiment

### (i) Construction of Recording Apparatus

The construction of a recording apparatus for recording a record medium in a third embodiment of the present invention is the same as that of the first embodiment of FIG. 1 except that the controller 1 records reproduction permission level updating information according to Table 3 as well as the reproduction permission specifying code explained in the second embodiment. As the software recorded with the reproduction permission level updating information, the game soft may be utilized.

**Table 3**

| reproduction permission specifying code | content |
|---|---|
| 00h | same as Table 2 |
| 01h to FFh | same as Table 2 |
| | |

| reproduction permission level updating information | content |
|---|---|
| 80h | change RP level to 0 |
| 81h | reduce RP level by 127 |
| : | : |
| : | : |
| FFh | reduce RP level by 1 |
| 00h | no change to RP level |
| 01h | increase RP level by 1 |
| : | : |
| : | : |
| 7Eh | increase RP level by 127 |
| 7Fh | change RP level to 255 |
| "RP level" in Table 3 represents a reproduction permission level of the reproducing apparatus. | |

In Table 3, the content of the reproduction permission specifying code is the same as that of Table 2. The reproduction permission level updating information is information to request updating the reproduction permission level 23 stored in the controller 11 according to the instruction content specified by each code of the reproduction permission level updating information.

### (ii) Construction of Reproducing Apparatus

The construction of a reproducing apparatus for reproducing a record medium in the third embodiment of the present invention is the same as that of the second embodiment, except that the controller 11 is adapted to update the reproduction permission level 23 according to the instruction of the reproduction permission level updating information in case that the additional information [add supplied from the demultiplexer 16 is the reproduction permission level updating information. Namely, the new reproduction permission level is stored in the memory of the controller 11. Thus, a memory which can be re-written with the reproduction permission level 23 such as an EEPROM (electrically erasable/programable read only memory) is suitable for the memory in the controller 11 in this case.

### (iii) Operation

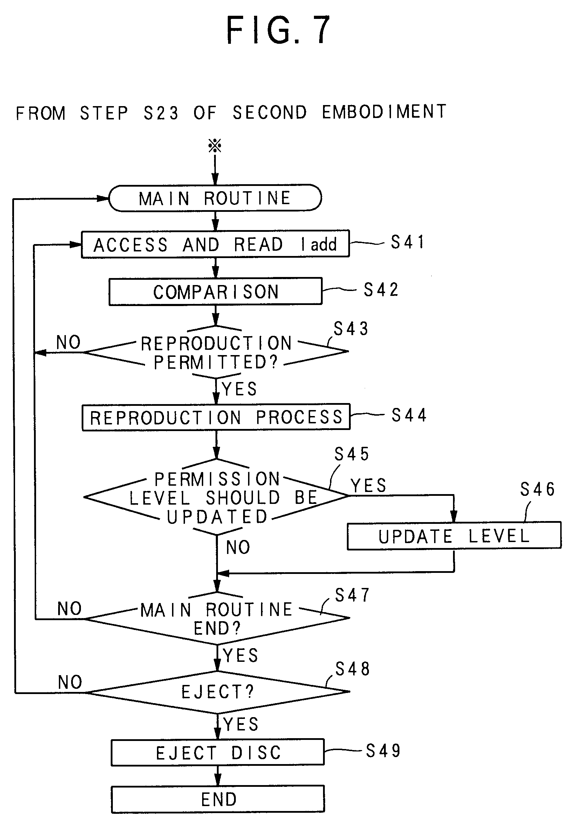

The operation of the third embodiment will be explained with referring to a flow chart of FIG. 7.

The flow chart of FIG. 7 has steps S 41 to S49 which replace the steps S24 to S33 of the second embodiment of FIG. 6.

In FIG. 7, steps S41 to S44 are the same as the steps 24 to S27 of the second embodiment of FIG. 6, which are based on the reproduction permission specifying code.

After the step S44, it is judged whether or not the reproduction permission level updating information is included in the additional information Iadd reproduced from the record medium (step S45). If it is included (step S45: YES), the flow branches to a step S46, where the reproduction permission level updating information is referred to and the content of the reproduction permission level 23 stored in the memory of the controller 11 according to the rule shown in Table 3 (step S46).

If the reproduction permission level updating information is not included (step S45: NO), the flow branches to a step S47. The steps S47 to S49 are the same as the steps S31 to S33 in the second embodiment of FIG. 6.

In order to understand the present embodiment more clearly, an example is explained here in which a game software is recorded to the record medium according to the present embodiment. Here, the game software is assumed to be such a software that, when one stage of the game having one kind of picture plane is cleared (i.e. completed), the user can proceed to a next stage having another kind of picture plane. In order to record such a game software to the record medium according to the present embodiment, the reproduction permission specifying codes, which determine whether or not the game picture plane is permitted to be reproduced for each of the stages of the game, are gradually changed to larger values while recording is proceeded. Namely, as the game is proceeded more and as it is proceeded to the newer game picture plane, the reproduction permission level is increased.

In case of reproducing the game software which has been recorded in this manner, at the first stage of the game, the user can play the game only on the first picture plane but cannot play the game on another picture plane of different stages, since the reproduction permission level updating information is "00h" (no change) while the reproduction permission level 23 held by the controller 11 is still low.

However, when the user completes the first game picture plane, the reproduction permission level of the reproducing apparatus (200) is increased by "1" since the code "01h" is written as the reproduction permission level updating information at the end of the first game picture plane. Thus, the user can now reproduce the second game picture plane which has the reproduction permission code of "01h".

The reproduction permission level updating information can be also adapted to the case of providing a new movie by use of the record medium. Namely, the reproduction permission level updating information is set so as to update the reproduction permission level only when a predetermined condition is satisfied. For example, time is used for the predetermined condition. More concretely, it may be constructed such that the internal clock of the reproducing apparatus 200 and the time information indicated by the reproduction permission level updating information are compared with each other, and that the reproduction permission level is not updated until the internal clock passes the indicated time.

Therefore, in case that the reproduction of a software is to be permitted from a specific date and time from a reason of marketing, by specifying the date and time of the release of the software, the reproduction of the software can be permitted only after the specific date and time.

As described above in detail, according to the third embodiment, the reproduction permission level of the reproducing apparatus 200 can be arbitrarily changed by the reproduction permission level updating information recorded on the record medium, so that the information permitted to be reproduced can be appropriately changed along with the progress of the software.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A method of recording a record medium (6) characterized in that the recording method comprises the steps of:
dividing main information, which is to be reproduced by a reproducing apparatus (200), into a plurality of information units each of which can be individually reproduced by the reproducing apparatus;
generating additional information for controlling a reproduction of the main information and including a reproduction permission information, which indicates whether the reproduction of each of the information units is permitted or prohibited, for each of the information units;
adding the generated additional information to each of the information units to form a data group respectively; and
recording each data group to the record medium.

2. A method according to claim 1, characterized in that the reproduction permission information includes level information indicating a level, which is to be compared with a reproduction permission level held by the reproducing apparatus (200), to determine whether the reproduction of each of the information units is permitted or prohibited according to a result of comparison.

3. A method according to claim 2, characterized in that the reproduction permission information further includes updating information to update the reproduction permission level of the reproducing apparatus.

4. An apparatus (100) for recording a record medium (6) characterized in that the recording apparatus comprises:
a dividing unit (3) for dividing main information, which is to be reproduced by a reproducing apparatus (200), into a plurality of information units each of which can be individually reproduced by the reproducing apparatus;
a generating unit (1) for generating additional information for controlling a reproduction of the main information and including a reproduction permission information, which indicates whether the reproduction of each of the information units is permitted or prohibited, for each of the information units;
an adding unit (SW1, SW2) for adding the generated additional information to each of the information units to form a data group respectively; and
a recording unit (4, 5) for recording each data group to the record medium.

5. An apparatus (100) according to claim 4, characterized in that the reproduction permission information includes level information indicating a level, which is to be compared with a reproduction permission level held by the reproducing apparatus (200), to determine whether the reproduction of each of the information units is permitted or prohibited according to a result of comparison.

6. An apparatus (100) according to claim 5, characterized in that the reproduction permission information further includes updating information to update the reproduction permission level of the reproducing apparatus (200).

7. An apparatus (100) according to any one of claims 4 to 6, characterized in that said adding unit (SW1, SW2) comprises a switching device (SW1) for successively switching the information unit and the additional information to each other so as to form the data group respectively.

8. An apparatus (100) according to any one of claims 4 to 7, characterized in that said generating unit (1) comprises a determining means for determining whether the reproduction of each of the information units is permitted or prohibited.

9. An apparatus (200) for reproducing a record medium (6'), which is recorded by a recording method comprising the steps of: dividing main information into a plurality of information units each of which can be individually reproduced; generating additional information for controlling a reproduction of the main information and including a reproduction permission information, which indicates whether the reproduction of each of the information units is permitted or prohibited, for each of the information units; adding the generated additional information to each of the information units to form a data group respectively; and recording each data group to the record medium,
characterized in that said reproducing apparatus (200) comprises:
a reproducing unit (12, 13, 14, 15, 16) for reproducing the main information and the additional information by a unit of the data group from the record medium (6');
a detecting unit (11, 24) for detecting the reproduction permission information included in the reproduced additional information for each data group; and
an output unit (11, 25, SW3, SW4) for outputting the reproduced main information only when the detected reproduction permission information indicates that the reproduction is permitted, for each data group.

10. An apparatus (200) according to claim 9, characterized in that:
the reproduction permission information includes level information indicating a level, which is to be compared with a reproduction permission level set to the apparatus, to determine whether the reproduction of each of the information units is permitted or prohibited;
said apparatus (200) further comprises a memory device (23) for holding the reproduction permission level; and
the output unit comprises a comparing unit (25) for comparing the level, which is indicated by the level information included in the detected reproduction permission information, with the reproduction permission level held by said memory device, to determine whether the reproduction of each of the information units is permitted or prohibited according to a result of comparison.

11. An apparatus (200) according to claim 10, characterized in that:
the reproduction permission information further includes updating information to update the reproduction permission level held by said memory device; and
said apparatus further comprises an updating unit (11) for updating the reproduction permission level held by said memory device on the basis of the updating information included in the detected reproduction permission information.
